# EUROPEAN PATENT APPLICATION

(11) **EP 1 525 937 A2**
(43) Date of publication of application: **27.04.2005**
(21) Application number: 04256186.0
(22) Date of filing: 06.10.2004
(51) Int. Cl.: B23B 51/06, B23B 51/04

(54) **Non-core type bit, non-core drill apparatus, and method of supplying cooling water thereto**

(30) Priority: 23.10.2003 JP 2003362721; 27.01.2004 JP 2004018328
(71) Applicant: Ishihara Kikai Kogyo Co. Ltd., Numazu-shi, Shizuoka-ken (JP)
(72) Inventor: Ishihara, Masamitsu, Tagata-gun, Shizuoka-ken (JP)
(74) Representative: Gambell, Derek

(57) **Abstract**

A cutting tip 14 is secured to the distal end of the shank 12 of a non-core type bit 16 that is designed to bore holes. The shank 12 has a water-supplying passage 22 and a water-discharging passage 26. The water-supplying passage 22 is configured to supply cooling water to the tip 14. The water-discharging passage 26 is configured to discharge the cooling water from a hole 24 being bored by the tip 14. A swivel 32 has a water-supplying port 28 that is connected to a cooling-water source 54. The cooling water flows from the cooling-water source 54 to the bit 14 through the water-supplying passage 22. A suction force applied by a cooling-water discharging means 56 compels the cooling water out of the hole 24. The cooling water is thereby discharged through the water-discharging passage 26.

## Description

The present invention relates to a non-core type bit that has a cutting tip and designed to bore small holes in concrete blocks, a non-core drill apparatus that comprises a non-core type bit of this type, and a method of supplying cooling water to the tip of the non-core drill apparatus.

So-called non-core type bits and so-called non-core drill apparatuses having a non-core type bit are known. A non-core type bit is used as a drill bit that is used to bore small holes, such as anchor-bolt holes, in concrete blocks (workpieces) such as concrete walls, floor beds or ceiling panels. The non-core type bit can make holes, without leaving cores. A non-core drill apparatus comprises a non-core type bit. Generally known as a non-core type bit includes a shaft-shaped shank and a cutting tip. The tip (diamond tip) is made of sintered diamond and secured to the distal end of the shank.

While the non-core type bit is being used to make a hole, cooling water is continuously supplied to the tip in order mainly to prevent a temperature rise of the tip. A system of supplying cooling water to the tip of a non-core type bit is disclosed in, for example, Japanese. Patent Application KOKAI Publication No. 11-10425.

As can be understood from Publication No. 11-10425, the shaft-shaped shank has a water passage for supplying cooling water. Through this passage, cooling water is supplied to the tip secured to the distal end of the shank.

The cooling water supplied to the tip through the water passage made in the shank leaks generally via the space around the shank. Thus, the cooling water is discharged out of the hole being bored. The cooling water discharged is muddy, containing dust particles made as the tip cuts the concrete block. The muddy water makes the concrete block dirty, particularly at the part that lies around the hole. This is inevitably because the muddy water is discharged from the hole via the space around the shank.

Since the concrete block gets dirty due to the muddy water discharged via that space, it is necessary to clean the block after the hole has been bored in the block. This unavoidably reduces the efficiency of boring the hole.

In the known system of supplying cooling water, the cooling water is discharged through the space around the shank. When the non-core drill apparatus is used, boring holes in ceiling panels, the cooling water discharged falls directly onto the worker who is using the drill apparatus. This not only lowers the efficiency of boring holes, but also impairs the work safety.

Japanese Patent Publication No. 3257602 discloses a non-core drill apparatus that has a dust-collecting means for collecting and processing the cooling water discharged from the hole being made, through the space around the shank. The dust-collecting means includes a suction head and a dust collector. The suction head covers that surface part of the concrete block, in which a hole is being bored. The dust collector draws the cooling water discharged into the suction head from the hole via the space around the shank.

It would take much time to locate the suction head at the part of the concrete block, not only complicating the hole-boring work, but also decreasing the efficiency thereof. Further, once the suction head has covered the part of the block, it is no longer easy for the worker to determine the position where the hole is being bored in the block.
Since the suction head needs to cover the concrete block tightly, if the block has rough surface, having recesses and projections, the suction head cannot function as well as is desired, failing to prevent the cooling water from leaking.

In the course of boring a hole with a non-core type tip of the known type, fresh cooling water is continuously supplied to the tip from the beginning to the end. Hence, the hole-boring work cannot be carried out in any place where a sufficient supply of cooling water is unavailable. That is, places where the hole-boring work can be performed are inevitably limited.

In the known method of boring a hole, the cooling water is discharged from the hole through the space around the shank. The cooling water is thus wasted, not recycled to be used again. This raises the cost of boring the hole, particularly in the case where liquid dedicated to the cooling of the tip is used as cooling water.

An object of the present invention is to provide a non-core type bit that can easily bore a hole in a concrete block, at a desired position, without making the block dirty.

Another object of the present invention is to provide a non-core drill apparatus that can easily bore a hole in a concrete block, at a desired position, without making the block dirty.

Still another object of the present invention is to provide a method of supplying cooling water to the tip of the non-core drill apparatus such that the cooling water may not make dirty the concrete block in which the apparatus is making a hole and may be recycled to be used again.

A non-core type bit according to this invention, which is described in claim 1, includes a water-discharging passage provided in a shank, along with a water-supplying passage. The cooling water can therefore be discharged through the water-discharging passage, without spilling around the hole being bored in a workpiece. This prevents the cooling water from making the workpiece dirty. Further, the hole can be seen since no suction heads cover the hole. This makes it possible to bore the hole at a desired position. Since a suction head need not be used, the hole boring can be achieved with high efficiency.

Non-core type bits according to the invention, which are described in claims 2 and 3, are simple in structure.

In a non-core drill apparatus according to this invention, which is described in claim 4, a water-discharging passage is provided in the shank, along with a water-supplying passage. The cooling water can therefore be discharged through the water-discharging passage, without spilling around the hole being bored in a workpiece. This prevents the cooling water from making the workpiece dirty. Further, the hole can be seen since no suction heads cover the hole. This makes it possible to bore the hole at a desired position. Since a suction head need not be used, the hole boring can be achieved with high efficiency. Moreover, the suction head need not be covered to discharge the cooling water, because the water can be supplied to the tip through the water-supplying passage and water-supplying port of the shank and discharged from the hole through the water-discharging port and water-discharging passage of the shank. This helps to simplify the structure of the non-core drill apparatus.

A non-core drill apparatus according to this invention, which is described in claim 5, includes a discharging means, which has a water-recollecting tank. The water-recollecting tank stores the cooling water discharged from the hole being made in a workpiece. This prevents the cooling water from being drained out.

A non-core drill apparatus according to this invention, which is described in claim 6, the cooling-water source includes a water-supplying tank and a pump means. The water-supplying tank stores cooling water. The non-core drill apparatus can therefore bore holes, even in places where no water source is available.

In a non-core drill apparatus according to this invention, which is described in claim 7, only an upper part of the cooling water in the water-recollecting tank can be supplied to the tip. Therefore, cooling water containing no dust particles can be circulated for re-use.

In a method of supplying cooling water, for use in a non-core drill apparatus, according to this invention, which is described in claim 8, the cooling water supplied to the tip provided at the distal end of the shank can be discharged from the hole being bored in a workpiece through the water-discharging passage, without spilling around the hole. The cooling water discharged from the hole does not make the workpiece dirty. In addition, the hole can be seen because no suction head covers the hole. This makes it possible to bore the hole at a desired position. Since the suction head need not be used, the hole boring can be achieved with high efficiency.

In a method of supplying cooling water according to this invention, which is described in claim 9, the cooling water can be recycled for re-use. Hence, the method can bore holes, even in places where no water source is available.

In a method of supplying cooling water according to this invention, which is described in claim 10, the supply of cooling water is delayed by a predetermined time from the time when the drill main body starts operating. This prevents the cooling water from leaking to the workpiece or from spilling thereto, and ultimately a loss of the cooling water.
FIG. 1 is a block diagram of a non-core drill apparatus in which a non-core bit is incorporated, and which is a first embodiment of the invention;
FIG. 2 is a schematic representation of the non-core drill apparatus, i.e., the first embodiment of the invention;
FIG. 3 is an exploded, perspective view showing some of the components of the non-core drill apparatus that is the first embodiment of this invention;
FIG. 4 is a front view of the non-core type bit;
FIG. 5 is a partially perspective view of the non-core type bit in which a modified tip is attached;
FIG. 6 is a partially perspective view of the non-core type bit in which another modified tip is attached;
FIG. 7 is a block diagram of a non-core drill apparatus in which a non-core bit is incorporated, and which is a second embodiment of this invention; and
FIG. 8 is an exploded, perspective view showing some of the components of the non-core drill apparatus that is the second embodiment of the present invention.

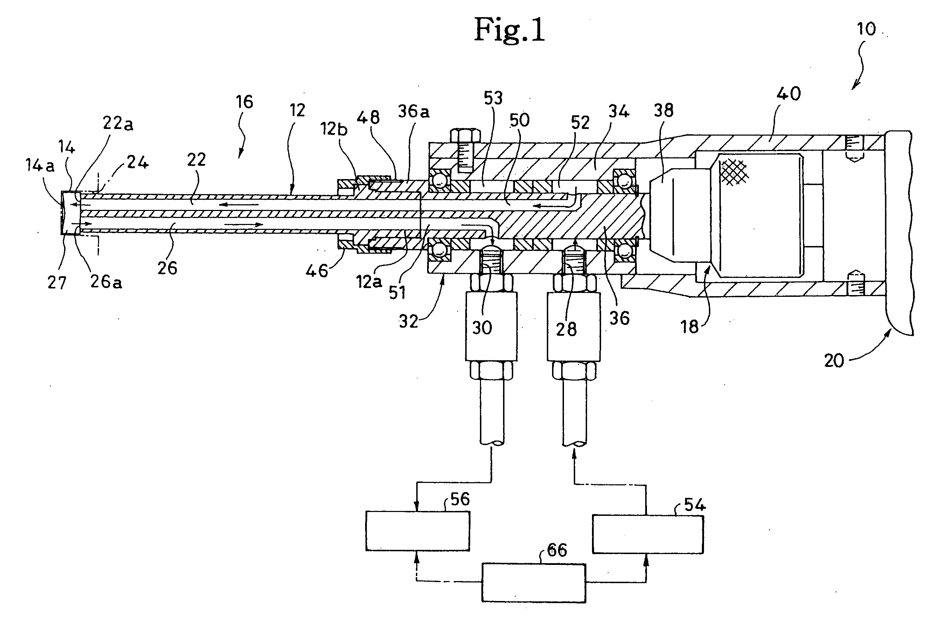

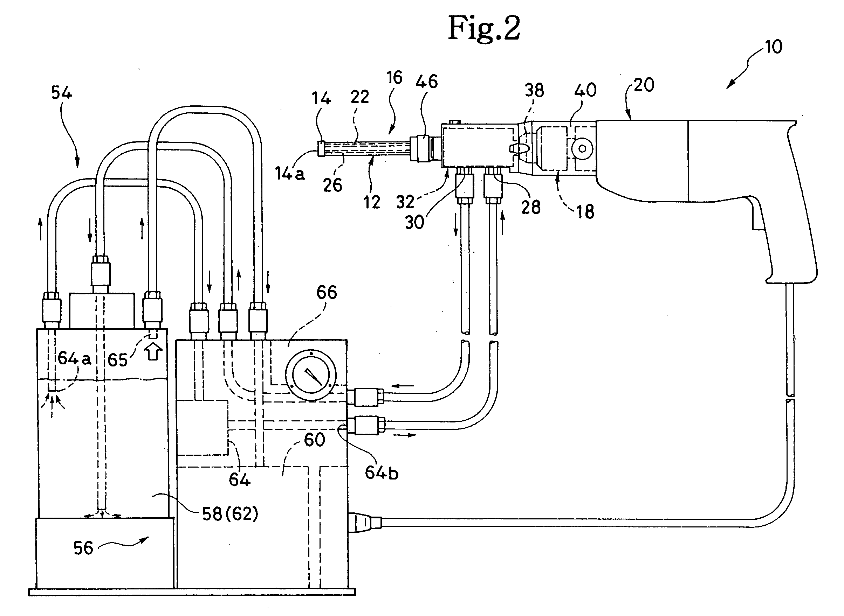

A non-core drill apparatus 10 according to the first embodiment of the invention will be described, with reference to FIGS. 1 and 2. FIG. 1 is a partially sectional view, and FIG. 2 is a schematic representation of the apparatus 10. As FIGS. 1 and 2 show, the non-core drill apparatus 10 comprises a non-core type bit 16 and a drill main body 20. The main body 20 is designed to rotate the non-core type bit 16. The bit 16 includes a shank 12 and a tip 14. The tip 14 is secured to the distal end of the shank 12.

The drill main body 20 is similar to an electric tool of the known type, such as an electric drill. The main body 20 has a motor (not shown) and a rotary member 18. The rotary member 18 is driven by the motor.

The tip 14 is made of, for example, sintered diamond. It has a diameter about 1 to 2 mm greater than that of the shank 12.

The tip 14 includes two tip-strips. The tip-strips are spaced apart, defining a slit 27 between them. The front 14a of the tip 14, i.e., the cutting surface of the tip, is concave at the center. The slit 27 extending between the tip-strips functions as a passage, as will be described later.

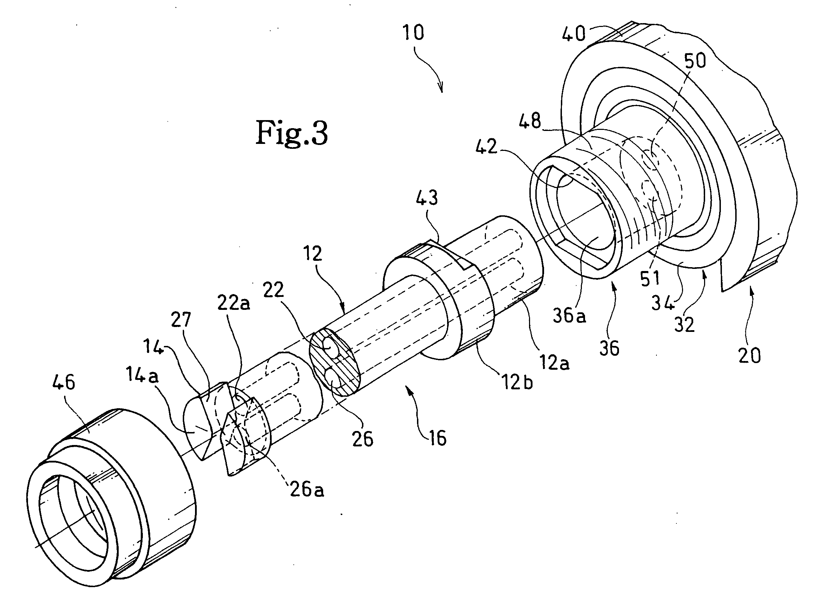

As seen from FIGS. 1 and 3, the non-core type bit 16 according to this invention is coupled to the rotary member 18 of the drill main body 20. Hence, the bit 16 is rotated when the rotary member 18 is driven by the motor. A water-supplying passage 22 and a water-discharging passage 26 are made in the shank 12, both extending parallel to the axis of the shank 12. The passage 22 is provided to supply cooling water to the tip 14 fixed to the distal end of the shank 12. The passage 26 is provided to discharge the cooling water from the hole 24 which the tip 14 has bored. The water-supplying passage 22 has an opening 22a at the distal end, which communicates with the slit 27 of the tip 14. Similarly, the water-discharging passage 26 has an opening 26a at the distal end, which communicates with the slit 27, too. Thus, the passages 22 and 26 open to the outside, at the openings 22a and 26a, respectively.

As FIGS. 1 and 2 show, the non-core type bit 16 is coupled by a swivel 32 to the drill main body 20.

As seen from FIG. 1, the swivel 32 includes a swivel main body 34 and a rotary member 36. The rotary member 36 is rotatably held in the swivel main body 34. The swivel 32 is arranged between the drill main body 20 and the non-core type bit 16. The swivel main body 34 is secured to the housing 40 of the drill main body 20 and cannot move. The rotary member 36 is coupled to the rotary member 18 of the drill main body 20 by a joint member 38 such as a drill chuck. The rotary member 36 is therefore rotated when the rotary member 18 is rotated.

As shown in FIGS. 1 and 3, the rotary member 36 of the swivel 32 has a distal end part 36a that has a large diameter. The proximal end part 12a of the shank 12 is fitted in the distal end part 36a of the rotary member 36. The distal end part 36a has a rotation-preventing part 42. The shank 12 has a flange 12b, which has a rotation-preventing part 43. When the rotation-preventing part 43 of the shank 12 engages with the rotation-preventing part 42 of the rotary member 36 of the swivel 32, the shank 12 and, hence, the non-core type bit 16 can rotate when the rotary member 36 is rotated.

A joint ring 46 is set in engagement with the flange 12b of the shank 12 and has a female screw. The female screw meshes with the male screw made on the distal end part 36a of the rotary member 36, which has a large diameter. Thus, the non-core type bit 16 and the rotary member 36 of the swivel 32 are coupled and secured to each other.

The main body 34 of the swivel 32 has a water-supplying port 28 and a water-discharging port 30. The ports 28 and 30 communicate with the water-supplying passage 22 and water-discharging passage 26 of the shank 12, respectively. As FIG. 3 shows, the rotary member 36 of the swivel 32 has passages 50 and 51. The passage 50 connects the water-supplying passage 22 of the shank 12 to the water-supplying port 28 of the swivel main body 34. The passage 51 connects the water-discharging passage 26 of the shank 12 to the water-discharging port 30 of the swivel main body 34.

As in a swivel of the known type, water reservoirs 52 and 53 are provided between the swivel main body 34 and the rotary member 36. The water-supplying port 28 of the swivel main body 34 always communicates with the water-supplying passage 22 of the shank 12 through the water reservoir 52. Similarly, the port 30 of the swivel main body 34 always communicates with the water-discharging passage 26 of the shank 12 through the water reservoir 53.

In the non-core drill apparatus 10 shown in FIG. 1, the cooling water is supplied to the tip 14 through the water-supplying port 28 of the swivel 32 and the water-supplying passage 22 of the shank 12. And the cooling water is discharged from the hole 24 being bored by the tip 14, through the water-discharging passage 26 of the shank 12 and the water-discharging port 30 of the swivel 32.

As can be understood from FIG. 1, the non-core drill apparatus 10 further comprises a cooling-water source 54 and a cooling-water discharging means 56. The cooling-water source 54 and cooling-water discharging means 56 are connected to the water-supplying port 28 and water-discharging port 30 of the swivel 32, respectively.

As FIG. 2 shows, the cooling-water discharging means 56 has a water-recollecting tank 58 and a vacuum pump 60. The tank 58 is a sealed tank and connected to the water-discharging port 30 of the swivel 32 to collect the cooling water from the water-discharging passage 26 of the shank 12. The vacuum pump 60 generates a vacuum in the tank 58 (i.e., seated tank) so that a suction force may acts in the water-discharging port 30 of the swivel 32.

The cooling-water source 54 has, for example, a water-supplying tank 62 and a pump means 64. The tank 62 stores cooling water and has a water-outlet port 64b. The pump means 64 supplies the cooling water from the water-supplying tank 62 to the outlet port 64b. The pump means 64 has a water-inlet port 64a, which is provided in the water-supplying tank 62. The water-outlet port 64b is connected to the water-supplying port 28 of the swivel 32.

As seen from FIG. 2, in the first embodiment, the water-supplying tank 62 of the cooling-water source 54 is a sealed tank. The tank 62 therefore serves as the water-recollecting tank 58 of the cooling-water discharging means 56, as well. Thus, the cooling water discharged from the hole 24 by the cooling-water discharging means 56 can be used repeatedly as cooling water to be supplied to the tip 14. In other words, the cooling water can be recycled and used again and again.

When the pump means 64 is operated, with a predetermined amount of water stored in the water-recollecting tank 58 (or water-supplying tank 62), the cooling water drawn into the tank 58 through the water-inlet port 64a flows to the water-supplying port 28 of the swivel 32 via the water-outlet port 64b. The cooling water then flows through the water-supplying passage 22 of the shank 12 to the opening 22a of the passage 22. The cooling water is thus applied from the opening 22a to the tip 14 (see FIGS. 1 and 3).

The vacuum pressure generated in the water-recollecting tank 58 (or water-supplying tank 62) as the vacuum pump 60 operates acts in a water-discharging port 65 that communicates with the water-discharging port 30 of the swivel 32. A suction force is thereby generated in the port 65. As a result, the cooling water discharged from the hole 24 is collected and stored in the water-recollecting tank 58 through the water-discharging passage 26 of the shank 12 and the water-discharging port 30 of the swivel 32.

As indicated above, the water-supplying passage 22 and water-discharging passage 26 are provided in the shank 12 in the present invention. The cooling water supplied via the water-supplying passage 22 is therefore discharged through the water-discharging passage 26, without leaking through the space around the shank 12. In addition, the suction force generated by the cooling-water discharging means 56 expels the cooling water from the hole 24 via the water-discharging passage 26 and the water-discharging port 30 of the swivel 32. Hence, the water would not leak through the space about the shank 12. The water thus discharged from the hole 24 can easily be collected in the water-recollecting tank 58. The water thus collected can be supplied to the tip 14. Hence, the cooling water is used again to cool the tip 14. This minimizes the absolute use amount of cooling water. Moreover, the non-core drill apparatus 10 can bore holes, without a loss of cooling water.

In the non-core drill apparatus 10, the muddy water containing dust particles formed as the tip 14 bores a hole does not leak into the space around the shank 12. The muddy water does not make dirty the concrete block in which the hole is being bored. The block need not be cleaned at all. Therefore, apparatus 10 can bore holes in the block at high efficiency.

No suction head needs to cover the non-core bit 16. This enhances the efficiency of boring holes, because it takes much time and labor to place a suction head to cover the non-core bit 16. Not covered with a suction head or anything else, the non-core bit 16 can be seen. This helps the worker to bore a hole at the very desired position on the block.

The water-supplying passage 22 and water-discharging passage 26 are connected at their respective openings 22a and 26a to the slit 27 of the tip 14. Therefore, the cooling water flows into the hole 24 cut by the tip 14 through the water-supplying passage 22 and slit 27 and flows from the hole 24 through the slit 27 and water-discharging passage 26. As the cooling water flows through the slit 27, it contacts the tip 14, cooling the tip 14 efficiently. Since the water flows through the slit 27, it can be collected well from the very start of the hole-boring process and can be discharged well from the hole 24.

As can be understood from FIGS. 1 and 3, the non-core type bit 16 of this invention is coupled to the rotary member 18 of the drill main body 20 and can therefore be rotated when the rotary member 18 is driven. Two passages are made in the shank 12 and extend parallel to the axis thereof. One passage is the water-supplying passage 22 that supplies the cooling water to the tip 14 provided at the distal end of the shank 12. The other passage is the water-discharging passage 26 that discharges the water from the hole 24 being bored by the tip 14. And the tip 14 has the slit 27 that communicates with the water-supplying passage 22 and the water-discharging passage 26, both provided in the shank 12.

Moreover, the cooling-water discharging means 56 connected to the water-discharging port 30 of the swivel 32 can draw the cooling water from the hole 24. Thus, a simple mechanism can discharge the cooling water from the hole 24.

In the first embodiment, the cooling-water source 54 has the water-supplying tank 62 and the pump mans 64. Nonetheless, the cooling-water source 54 may not be used. Instead, a tap-water faucet may be connected directly to the water-supplying port 28 of the swivel 32, because it only needs to supply cooling water to the tip 14 that is provided at the distal end of the shank 12.

It is desirable, nevertheless, to use the cooling-water source 54 that has the water-supplying tank 62 and the pump mans 64. Provided with the cooling-water source 54, the non-core drill apparatus 10 can be used anywhere, even if no tap-water faucets are available.

In the first embodiment, the cooling-water discharging means 56 has the water-recollecting tank 58. Nonetheless, the means 56 may not have the water-recollecting tank 58. The cooling water may be discharged from the hole 24 directly into the drainage ditch, without storing the cooling water in a reservoir such as a water-recollecting tank.

However, it is desirable to use the water-recollecting tank 58. Having the water-recollecting tank 58, the non-core drill apparatus 10 can be used anywhere, even if no drainage ditches are provided.

The water-recollecting tank 58 may have the cooling-water discharging means 56, and the water-supplying tank 62 may have the cooling-water source 54. In this case, the cooling water is recollected and stored in the tank 58 to be used again. Thus, the non-core drill apparatus 10 can bore holes anywhere, even if neither a tap-water faucet nor a drainage ditch is available. The apparatus 10 can therefore be a versatile one.

The water-recollecting tank 58 and water-supplying tank 62 can be replaced by a single tank that has the cooling-water discharging means 56 and the cooling-water source 54. In this case, the cooling water can be recycled for repeated use. This minimizes the absolute amount of water necessary and the loss of water. The running cost of the non-core drill apparatus 10 therefore decreases, particularly when the cooling water is liquid dedicated to the cooling of the tip 14.

In the first embodiment, the cooling-water discharging means 56 includes the water-recollecting tank 58 and the vacuum pump 60. The tank 58 is a sealed tank, and the vacuum pump 60 generates a vacuum in the tank 58. The cooling-water discharging means 56 may be replaced by a water-discharging means of the known type, which includes a storage tank and a suction pump. This is because it suffices to recollect the cooling water from the hole 24 into the water-recollecting tank 58 through the water-discharging passage 26, provided in the shank 12 and the water-discharging port 30 of the swivel 32.

The cooling water discharged from the hole 24 and recollected in the water-recollecting tank 58 is muddy, containing the dust particles that are made as the tip 14 cuts the concrete block. If the muddy water is used as cooling water, the dust particles may clog the narrow passages in the pump means 64, the water-supplying passage 22 and water-discharging passage 26 of the shank 12.

To prevent this from happening, filters may be used to remove the dust particles from the cooling water, which may then be recycled and used again to cool the tip 14. No filters need to be used in the first embodiment, nonetheless. As FIG. 2 shows, the water-supplying port 64a of the pump means 64 is located at so high a level that the pump means 64 supplies only the upper part of the water in the water-recollecting tank 58, to the water-supplying passage 22 made in the shank 12. The upper part of the water is clean, containing no dust particles that are deposited on the bottom of the water-recollecting tank 58. Since no filters are used, the apparatus 10 is simple in structure and, hence, can easily be maintained in good conditions.

The non-core drill apparatus 10 bores the hole 24 in a flat concrete block. It is therefore difficult to recollect the cooling water until the hole 24 has some depth if the water is supplied to the tip 14 from the very beginning of the hole-boring work. Until the hole become sufficiently deep, the water is drained and wasted. To save the cooling water, the apparatus 10 has a control means 66 as is illustrated in FIGS. 1 and 2. The control means 66 controls the cooling-water source 54 so that the supply of cooling water is delayed by a prescribed time from the start of operation of the drill main body 20, i.e., namely from the time the rotary member 18 starts rotating.

The control means 66 has a timer or the like that sets the time by which the supply of cooling water is delayed, if the cooling-water source 54 includes one water-supplying tank 62 (serving as water-recollecting tank 58, too) and the pump means 64.

Since the supply of cooling water is delayed by the prescribed time from the start of operation of the drill main body 20, no water is supplied to the tip 14 until the hole 24 being bored becomes sufficiently deep. Therefore, the cooling water is not drained at the beginning of the hole-boring work. The water is thus saved, minimizing the absolute amount of cooling water required.

Not only the supply of cooling water is delayed, but also the cooling water may be intermittently supplied to the tip 14. The intermittent supply of cooling water helps to save the cooling water, as does the delayed supply of cooling water which prevents the draining of water at the start of operation of the drill main body 20. Hence, the absolute amount of cooling water required is small.

The intermittent supply of cooling water may be performed after the hole 24 has acquired some depth. In this case, too, the absolute amount of cooling water is small.

In the first embodiment, the shank 12 of the non-core type bit 16 is coupled to the rotary member 36 of the swivel 32 by the joint ring 46 that is a screw-type one. The shank 12 needs only to be coupled to the rotary member 36 of the swivel 32 so that it may rotate together with the rotary member 18 of the drill main body 20. In view of this, the shank 12 can be coupled by any other means than the screw-type joint ring 46.

Similarly, the rotary member 18 of the drill main body 20 needs only to be coupled to the rotary member 36 of the swivel 32 so that it may rotate together with the rotary member 36. Thus, the rotary member 18 can be coupled by any other means than the drill chuck (i.e., joint member 38).

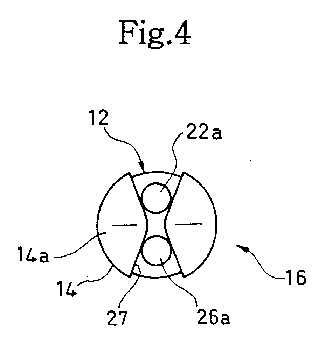

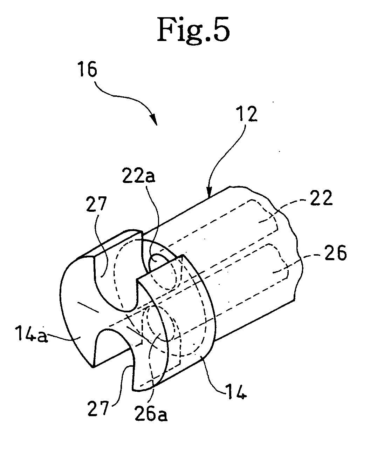

As shown in FIGS. 3 and 4, the tip 14 has its shape defined by two substantially sector-shaped tip-strips in the first embodiment. It suffices for the tip 14 to have the slit 27 that communicates with the openings 22a and 26a of the water-supplying and water-discharging passages 22 and 26 that are made in the shank 12. Hence, the tip 14 can be made of a single tip-strip that has two slits 27 as is illustrated in FIG. 5.

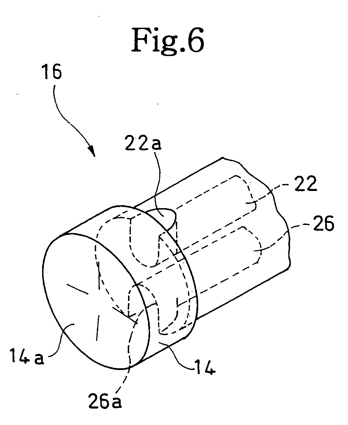

In the first embodiment, too, the openings 22a and 26a are made in the distal end of the water-supplying and water-discharging passages 22 and 26, respectively. The openings 22a and 26a need only to connect the passages 22 and 26 to the hole 24. Therefore, the openings 22a and 26a need not be made in the distal end of the shank 12. They can be made, for example, in the circumferential surface of the distal end of the shank 12 as is shown in FIG. 6. In this case, the tip 14 need not have a slit that communicates with the openings 22a and 26a of the shank 12. Since the tip 14 need not have a slit in its circumferential surface, it can be the ordinary type that is shown in FIG. 6.

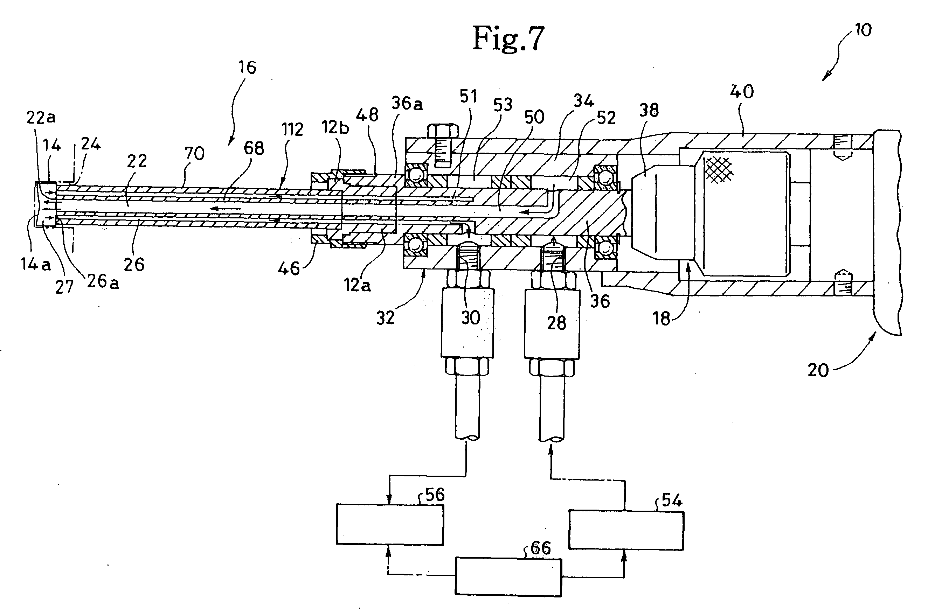

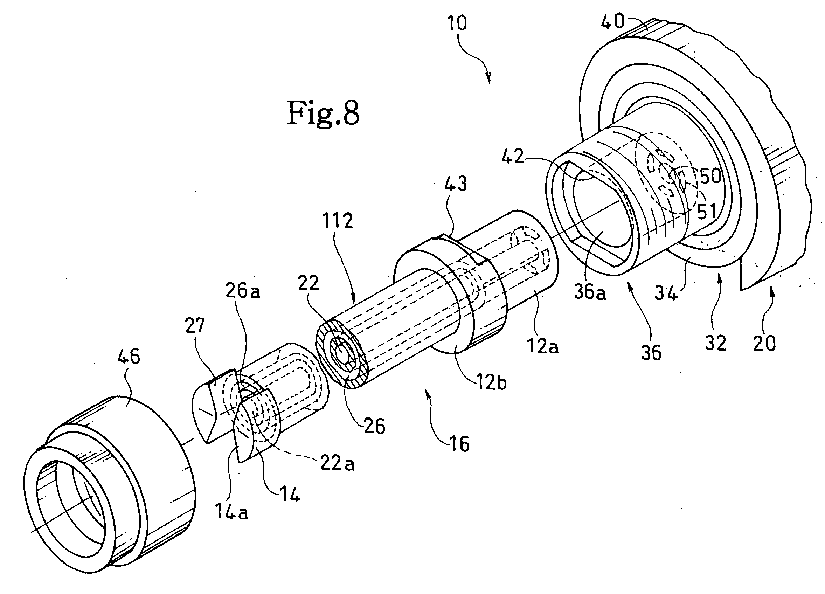

In the first embodiment, the water-supplying passage 22 and the water-discharging passage 26 are cut in the shank 12, extending parallel to the axis of the shank 12. Nonetheless, the passages 22 and 26 may be coaxial, defined by an inner tube 68 and an outer tube 70 that are arranged coaxial as shown in FIG. 7 and 8. FIG. 7 and 8 show a non-core drill apparatus 10 according to the second embodiment of the invention. In the second embodiment, the inner tube 68 and the outer tube 70 constitute a shank 112.

In the non-core drill apparatus 10 according to the second embodiment, the inner space of the inner tube 68 serves as water-supplying passage 22, and the gap between the inner tube 68 and the outer tube 70 serves as water-discharging passage 26. The water-supplying passage 22 communicates with the water-supplying port 28 of the swivel 32, and the water-discharging passage 26 communicates with the water-discharging port 30 of the swivel 32. The passages 50 and 52 are thereby provided in the rotary member 36 of the swivel 32.

The second embodiment is identical to the first embodiment, except for the shank 112. Therefore, the components identical to those of the first embodiment are designated at the same reference numerals and will not be described.

In the non-core type bit 16 having the double-tube shank 112, too, the shank has a water-supplying passage 22 and a water-discharging passage 26. Hence, the cooling-water discharging means 56 can discharge and recollect the cooling water, by applying a suction force on the water, in the same manner as in the first embodiment.

In the second embodiment, the inner space of the inner tube 68 serves as water-supplying passage 22, and the gap between the inner tube 68 and the outer tube 70 serves as water-discharging passage 26. The tubes 68 and 70 may define these passages, the other way around, nevertheless. That is, the inner space of the inner tube 68 may serve as water-discharging passage 26, and the gap between the inner tube 68 and the outer tube 70 may work as water- supplying passage 22.

The embodiments described above are nothing more than examples for explaining the present invention, not limiting the scope of the invention. Various changes and modifications can be made, within the scope and spirit of the present invention.

## Claims

1. A non-core type bit includes a shank, a cutting tip which is secured to a distal end of the shank, a water-supplying passage which is provided in the shank and extends in an axial direction of the shank and which is configured to supply cooling water to the tip
**characterized in that** the bit (16) further includes a water-discharging passage (26) which is provided in the shank (12,112) and extends in the axial direction of the shank (12,112) and which is configured to discharge the cooling water from a hole (24) being bored by the tip (14).

2. The non-core type bit according to any one of claims 1, wherein the water-supplying passage (22) and the water-discharging passage (26) are through holes (24)which extend along an axis of the shank (12).

3. The non-core type bit according to any one of claims 1, wherein the shank (112) is a double-tube structure comprising an inner tube (68) and an outer tube (70) which are arranged coaxial with each other, the inner tube (68) has an inner space which serves as the water-supplying passage (22) , and a gap between the inner and outer tubes (68,70) serves as the water-discharging passage (26).

4. A non-core drill apparatus comprises a non-core type bit including a shank, a cutting tip which is secured to a distal end of the shank, a water-supplying passage which is provided in the shank and extends in an axial direction of the shank and which is configured to supply cooling water to the tip, a drill main body including a rotary member which is configured to rotate the non-core type bit and a cooling-water source which is connected to the water-supplying passage of the shank;
**characterized in that** the non-core bit (16) further includes a water-discharging passage (26) which is provided in the shank (12,112) and extends in the axial direction of the shank (12,112) and which is configured to discharge the cooling water from a hole (24) being bored by the tip (14),
and the apparatus (10) further comprises
a swivel (32) having a swivel main body (34) which includes a rotary member (36) provided between and connected to the non-core bit (16) and the rotary member (18) of the drill main body (20) and which has a water-supplying port (28) and a water-discharging port (30) which communicate with the water-supplying passage (22) and water-discharging passage (26) of the shank (12,112), respectively; and
discharging means (56) which is connected to the water-discharging port (30) of the swivel (32) and which is configured to apply a suction force,
wherein the cooling-water source (54) is connected to the water-supplying passage (22) of the shank (12,112) through the water-supplying port (28) of the swivel (32), the cooling water supplied from the cooling-water source (54) flows to the tip (14) through the water-supplying port (28) of the swivel (32) and the water-supplying passage (22) of the shank (12,112), and the cooling water is forced out of the hole (24) through the water-discharging passage (26) of the shank (12,112) and the water-discharging port (30) of the swivel (32) by virtue of the suction force applied by the discharging means(56).

5. The non-core drill apparatus according to claim 4, wherein the discharging means (56) includes a pump means (60) and a water-recollecting tank (58), the pump means (60) draws the cooling water from the hole (24), and the water-recollecting tank (58) stores the cooling water discharged and recollected from the hole (24) by the pump means (64).

6. The non-core drill apparatus according to claim 4 or 5, wherein the cooling-water source (54) includes a water-supplying tank (62) and a pump means (64), the water-supplying tank (62) stores the cooling water, and the pump means (64) supplies the cooling water from the water-supplying tank (62) to the tip (14) through the water-supplying port (28) of the swivel (32) and the water-supplying passage (22) of the shank (12,112).

7. The non-core drill apparatus according to any one of claims 4 to 6, wherein the water-supplying port (28) of the swivel (32) is located at such a level as to supply only an upper part of the cooling water in the water-recollecting tank (58).

8. A method of supplying cooling water, for use in a non-core drill apparatus, the method comprising the step of supplying cooling water from a cooling-water source to a hole-boring tip provided at the distal end of the shank of a non-core type bit, through a water-supplying passage made in the shank, extending in an axial direction of thereof and having an opening at a distal end thereof;
**characterized in that** the method further comprises the step of discharging the cooling water from the hole (24) being bored by the tip (14), through a water-discharging passage (26) made in the shank (12,112), and extending in an axial direction thereof and having an opening (26a) at the distal end thereof, by virtue of a suction force applied by a discharging means (56) which communicates with the water-discharging passage (26).

9. The method according to claim 8, wherein cooling water discharged from the hole (24) is accumulated, and the cooling water accumulated is recycled to be used again.

10. The method according to claim 8 or 9, wherein the supply of cooling water from a cooling-water source (54) is delayed by a predetermined time from the time when a drill main body (20) of the non-core drill apparatus (10) starts operating.
